# EUROPEAN PATENT APPLICATION

(11) **EP 3 922 584 A1**
(43) Date of publication of application: **15.12.2021**
(21) Application number: 21177696.8
(22) Date of filing: 04.06.2021
(51) Int. Cl.: B65G 15/00, B65G 15/22, B65G 15/60, B65G 21/20

(54) **CONVEYOR SYSTEM**

(30) Priority: 08.06.2020 BE 202005407
(71) Applicant: FT Solutions BV, 2610 Wilrijk (BE)
(72) Inventor: Peeters, Christian, 2550 Kontich (BE); Lemmens, Eddy, 2840 Reet (BE)
(74) Representative: IP HILLS NV

(57) **Abstract**

Conveyor system for conveying vials along a trajectory comprising an endless string, at least two pulleys configured to engage said endless string, an actuation mechanism configured to actuate at least one of said at least two pulleys so that the endless string rotates about the at least two pulleys, and guiding side walls configured to guide the vials along the trajectory of the conveyor system.

## Description

### Field of the Invention

The present invention generally relates to a conveyor system for vials, for example, for pharmaceutical vials, as well as to a cross-over system for conveying vials from a first room into a second room, a buffer system for buffering vials in a vial conveyor system and a method of conveying vials.

### Background of the Invention

Conveyor systems are largely known and used and come in a wide variety according to the goods that need to be handled and/or transported. The conveyor system usually includes a moving carrier surface which is configured to carry the products to be handled and/or transported by the conveyor system. The carrier surface can for example be a flat belt, or a plurality of adjacent rollers, or a chain belt, or any other type of carrier belt known to the person skilled in the art. The belt of the carrier surface can for example be an endless belt, in which case the endless belt can be actuated at one or more places along the belt. In case of a roller belt, one or more rollers may be actuated individually.

In some industries, such as for example in the pharmaceutical industry, conveyor systems may need to be operated within or go through clean rooms, having strict limits on air quality. In these cleanrooms, dust produced by the functioning of a conveyor system can be an issue. Dust can for example be produced by friction between an actuating system of the carrier surface and the carrier surface itself, or between different elements of the carrier belt, for example in the case of chain belts, or between the product carried on the carrier surface and the surface itself. Additional dust may be due to friction between the products that are carried by the conveyor system. In the case of vials, small bottles, flasks or other types of containers, in glass or plastic, being carried on the carrier surface, tiny cracks may occur in the glass or plastic, because of the objects touching each other during handling on the carrier surface, for example in a buffer zone of the conveyor system. These micro-cracks may produce additional dust or impurities in the air and may hamper safety of the vials themselves. At present, vials in the pharmaceutical industry are generally transported on conveyor systems having plastic chain belts, which results in a relatively high level of dust in a clean room in the form of plastic particles and glass particles being liberated due to friction between different elements of the conveyor system. The increasing level of requirements on air purity in clean rooms can thus be relatively difficult to be reached.

It is therefore an aim of the present invention to solve or at least alleviate one or more of the above-mentioned problems. In particular, the invention aims at providing a conveyor system which can significantly reduce dust production during operation.

### Summary of the Invention

To this aim, according to a first aspect of the invention, there is provided a conveyor system characterized by the features of claim 1. In particular, the conveyor system comprises an endless string, at least two pulleys configured to engage said endless string such that the endless string extends around the two pulleys, an actuation mechanism configured to actuate at least one of said at least two pulleys so that the endless string rotates about the at least two pulleys, and guiding side walls configured to guide the vials along the trajectory of the conveyor system. In an inventive way, the endless string is configured to carry the vials along at least part of the trajectory, in particular along the straight line in between two pulleys. Since the vials are carried on an endless string, and not on a chain belt, as is the case in the prior art, there is a relatively important reduction of friction and thus of dust production. Additionally, a string can be cleaned more easily than a chain belt conveyor, which is an important advantage for a conveyor system in a clean room. Moreover, replacement of a string is substantially cheaper and can be done more rapidly than replacement of a chain belt.

The endless string can be included in a substantially horizontal plane. In the prior art, only half of the surface of a chain belt is used for conveying, and the other half is unused since it is located underneath, since the plane of rotation of the pulleys is a substantially vertical plane. When the pulleys are configured to rotate in a substantially horizontal plane, the endless string can be included in said substantially horizontal plane as well. In this way, substantially the whole endless string can be used for carrying vials. However, when space needs to be saved, the endless string can also be included in a substantially vertical plane. Both placements can also be combined in a larger conveyor system including a plurality of endless strings.

An upper edge of the at least two pulleys can preferably include a string receiving recess configured to receive the endless string such that the endless string protrudes above the pulley to allow the endless string to carry the vials. An upper edge of the pulley can be defined as an edge of the pulley at the side where the vials can be carried. In this way, the string can continue to carry the vials also around the pulleys, which can avoid transfer of vials from a first support to a second support. Alternatively, a side of the at least two pulleys can include a string receiving recess, for example in case of pulleys rotating in a substantially vertical plane.

The conveyor system can preferably further comprise a channel bottom including a slit, in which slit the endless string is configured to move while protruding above the channel bottom. The channel bottom may but need not be directly connected to the guiding side walls. Even without an engaging contact between the channel bottom and the guiding side walls, a cross-section of the guiding side walls and the channel bottom may be substantially U-shaped although with a slit on the channel bottom. The vials are carried by the endless string and guided by the guiding side walls, while the channel bottom is just alongside the string for additional safety of the endless string and the vials. When the endless string is rotating, the vials are preferably not in contact with the channel bottom and can remain just above the channel bottom. At the same time, the slit in the channel bottom has a width such that the endless string can freely rotate in the slit without contacting the channel bottom so as to avoid additional friction. However, the slit is preferably only marginally larger than a diameter of the string to limit the freedom of lateral movement of the string.

The endless string can for example have a substantially round cross-section, which can allow a good grip on the pulleys and at the same time allow carrying of the vials. A substantially round cross-section can have the advantage that in case of contact between the endless string and for example the channel bottom, the contact can be limited to a linear contact.

The guiding side walls can preferably be replaceable and/or adjustable in function of a maximal external diameter of the vials to be conveyed. The guiding side walls can be placed in such a way that a distance between opposite side walls is slightly larger than a maximal external diameter of vials to be conveyed. In this way, frictional contact between the vials and the guiding side walls can be reduced to a minimum while ensuring stability of the vials during conveying.

The conveyor system can preferably further comprise at least one string support block configured to support the string in between two pulleys. The at least one string support block can provide additional support to the endless string carrying the vials, in particular at a distance between the pulleys, thus avoiding sagging of the endless string. The at least one string support block can be in engaging contact with the string to support the string. An upper side of the string support block can preferably be shaped such as to match an outer shape of the endless string, for example a convex substantially half-circular gutter for an endless string having a substantially circular cross-section. It is however preferred that the at least one string support block, in particular an upper end of the string support block, has a width that is smaller than a width of the slit in the channel bottom so that there is no contact between the string support block, in particular the upper end of the string support block, and the channel bottom.

The at least one string support block can advantageously be movable between a first position, in which the string support block supports the string, and a second position, in which the string support block is retracted. In the retracted position of the string support block, the string support block may still be in contact with the string or may lose contact with the string. In combination with the presence of the channel bottom, the movable string support block can provide a braking system of the vials being carried on the string. When the string support block is in the first position, the vials are carried by the string which is rotating on the pulleys. When the string support block moves to the retracted position, for example to a position such that the endless string is under a level of the channel bottom, the vials will come to rest on the channel bottom instead of being carried on the string. In this way, the vials can come to a halt without the pulleys being stopped. This can provide a relatively smooth halt of the vials, just by a retracting movement of the at least one string support blocks. Moving of the at least one string support block may be done by an actuating unit. This can for example be a pneumatic actuation, or an electric actuation, or any other suitable type of actuation.

The conveyor system can further comprise a sensor configured to sense a quantity of vials passing at a given point of the trajectory. The sensor can for example be an optical sensor or any other type of suitable sensor. In this way, the conveying of the vials can be monitored to avoid jamming of the vials, which can damage the vials and produce unwanted dust particles.

The conveyor system may preferably further comprise a control unit configured to control the moving of the at least one string support block based on the quantity of vials passing as sensed by the sensor. The control unit can be configured to receive data from the sensor sensing a quantity of vials passing at a given point. Based on these data the control unit can then control and actuate the at least one string support block. For example, in case of too many vials passing at a given point, the control unit can control an actuation unit of the at least one string support block to move from the first position to the second position, i.e. to lower the string support block such that the string carrying the vials is lowered under the level of the channel bottom and the vials come to a halt on the channel bottom.

The conveyor system can for example further comprise a transfer wheel configured to be in engaging contact with a first endless string and to be at a distance of a second endless string, wherein the guiding side walls are configured to transfer vials from the first endless string via the transfer wheel to the second endless string. The distance between the transfer wheel and the second endless string can be chosen such that there is no engaging contact between the string and the transfer wheel but close enough to allow transfer of the vial, so preferably smaller than a radius of the vials to be conveyed and transferred. The distance between the transfer wheel and the second endless string can for example be included in a range of more or less 0.05mm and more or less 10 mm, more preferably in a range of more or less 0.1 mm and more or less 5 mm. The transfer wheel can include a lateral recess configured to receive the first endless string such that a movement of the first endless string is transferred to the transfer wheel to drive the transfer wheel. The lateral recess is preferably configured such that the first endless string does not protrude above an upper surface of the transfer wheel. An upper surface of the transfer wheel is preferably configured to receive the vials from the first endless string and transfer the vials to the second endless string. Additionally, the transfer wheel can allow a transfer of vials between a series of endless strings placed alongside each other so that the trajectory can become a zigzagging trajectory, which is a compact way of conveying a relatively large number of vials.

According to a further aspect of the invention, there is provided a cross-over system for conveying vials from a first room into a second room as claimed in claim 12. Such a cross-over system can provide a compact way to convey vials for example into or out of a clean room. Given the strict requirements of clean rooms, in which there is often overpressure, the conveyor systems inside and outside of clean rooms can preferably not be in engaging contact with each other. The distance between the transfer wheel and the second endless string can for example be included in a range of more or less 0.05mm and more or less 10 mm, more preferably in a range of more or less 0.1 mm and more or less 5 mm. The smaller the cross-over system, the more energy can be saved, the cheaper is a use of the clean room. The cross-over according to the present invention can also provide one or more of the above-mentioned advantages.

According to a further aspect of the invention, there is provided a buffer system for buffering vials in a vial conveyor system as claimed in claims 13-17. Such a buffer system can provide one or more of the above-mentioned advantages.

According to a further aspect of the invention, there is provided a method for conveying vials along a trajectory as claimed in claims 18-21. This method can provide one or more of the above-mentioned advantages.

The present invention will be further elucidated with reference to figures of exemplary embodiments. Corresponding elements are designated with corresponding reference signs.

### Brief Description of the Drawings

Fig. 1 shows a schematic top view of a preferred embodiment of a conveyor system according to a first aspect of the invention;
Fig. 2 shows a schematic cross-sectional view according to section A-A of the preferred embodiment of the conveyor system shown in Figure 1;
Fig. 3a and 3b show a schematic cross-sectional view according to section B-B of the preferred embodiment of the conveyor system shown in Figure 1;
Fig. 4 shows a schematic cross-sectional view according to section D-D of the preferred embodiment of the conveyor system shown in Figure 1;
Fig. 5 shows a cross-section according to the section C-C of the pulley of the preferred embodiment of the conveyor system shown in Figure 1;
Fig. 6 shows a top view of a second embodiment of a conveyor system according to the invention;
Fig. 7 shows a side view of a transfer wheel of the second embodiment of the conveyor system shown in Figure 6;
Fig. 8 shows a top view of a preferred embodiment of the cross-over system according to a second aspect of the invention;
Fig. 9 shows a perspective view of a preferred embodiment of a buffer system according to a third aspect of the invention.

### Detailed Description of Embodiment(s)

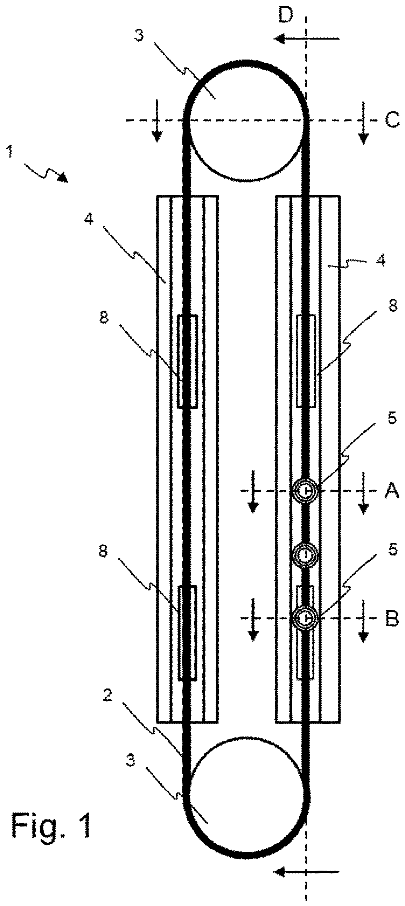

Figure 1 shows a schematic top view of a preferred embodiment of a conveyor system according to a first aspect of the invention. The conveyor system 1 comprises an endless string 2 and two pulleys 3 engaging the endless string 2. An actuation mechanism (not shown) is configured to actuate at least one of the two pulleys 3 so that the endless string 2 rotates about the two pulleys. In the present embodiment, the endless string 2, and consequently also the pulleys 3, are included in a substantially horizontal plane. A distance between said two pulleys 3 can for example be included in a range of more or less 0.5 m to more or less 5 m, preferably in a range of 2.5 m to more or less 4 m. A diameter of the pulley 3 can for example be included in a range of 5 cm to more or less 30 cm, preferably around 10 cm. The conveyor system 1 also includes guiding side walls 4 configured to guide the vials 5 along the trajectory of the conveyor system 1. The guiding side walls 4 can be placed on opposite sides along the endless string 2. These guiding side walls 4 can in combination with the endless string 2 define a trajectory of the conveyor system 1.

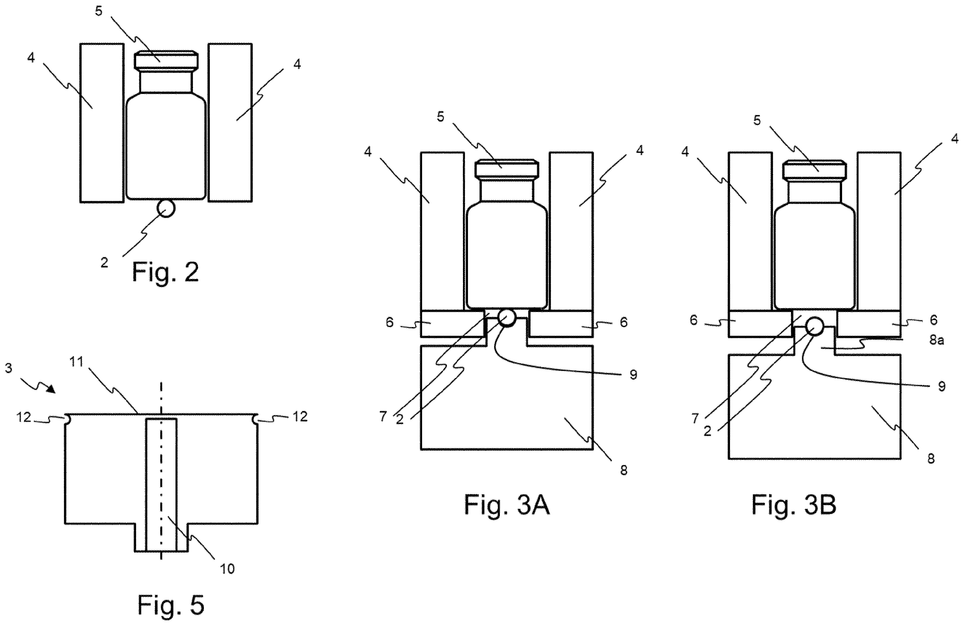

Figure 2 shows a cross-sectional view according to section A-A of the preferred embodiment of the conveyor system shown in Figure 1. The present conveyor system is configured to convey vials 5 along a trajectory, in particular pharmaceutical vials 5, which are often made of glass or any hard plastic. Such pharmaceutical vials 5 can be relatively small, for example being configured to include a quantity in a range of more or less 1 ml - 50 ml, preferably in a range of substantially 5 ml - 30 ml. Contrary to the prior art, there is no separate carrying surface or belt on which the vials to be conveyed are placed. The endless string 2 is configured to carry the vials 5 instead. So, the vials are placed directly on the endless string 2. The endless string 2 can have a substantially round cross-section as shown. A distance D between the guiding side walls 4 on opposite sides along the endless string 2 can be chosen in function of a maximal external diameter of the vial 5. The external diameter of the vial 5 can vary in a range of for example more or less 10 mm - 65 mm, more preferably around 16 to more or less 36 mm but could also be larger or smaller. It is preferred that said distance D is larger than the maximal external diameter of the vial 5 so that friction between the vial 5 and the guiding side walls 4 during conveying can be minimized or even avoided. At the same time, said distance D is preferably only marginally larger than the maximal external diameter of the vial 5 to ensure stability of the vials 5 during conveying. Said distance D can for example be more or less 1 mm to 3 mm, for example substantially 2 mm, larger than the maximal external diameter of the vial 5, or more or less. The guiding side walls 4 are preferably replaceable and/or adjustable in function of the maximal external diameter of the vials 5 to be conveyed. The guiding side walls 4 can for example be made of a kind of plastic, for example in polyoxymethylene known as POM or acetal, or for example in a high density polyethylene such as HDPE1000 but can also be made of any other suitable material. The guiding side walls 4 can extend along a height of the vial 5 but can also be larger or smaller.

Fig. 3A and 3B show a schematic cross-sectional view according to section B-B of the preferred embodiment of the conveyor system 1 according to the invention. The conveyor system 1 can additionally include a channel bottom 6 including a slit 7, in which slit 7 the endless string 2 is configured to move while protruding above the channel bottom 6, as shown in Figure 3a. During conveying of the vial 5, the vial 5 can be carried by the endless string 2 only and is preferably not in contact with the channel bottom 6 to avoid friction between the channel bottom 6 and the vial 5 during conveying. The channel bottom 6 can be in contact with the guiding side walls 4, for example to provide stability to the guiding side walls 4 but can also be at a distance of said guiding side walls 4. The channel bottom 6 can extend along substantially the entire trajectory of the vials 5 or can be limited to certain parts of the trajectory. The guiding side walls 4 together with the channel bottom 6 can substantially have an inverted U-shape. The slit 7 in the channel bottom 6 can preferably have a width that is only marginally larger than a diameter of the endless string 2 moving in the slit 7. If a diameter of the endless string 2 is more or less 3 mm, then a width of the slit can for example be around 3.1 mm. Such a small width of the slit 7 relative to a diameter of the endless string can improve the stability of the endless string 2 moving in the slit 7. The conveyor system 1 can further comprise at least one string support block 8 configured to support the endless string 2 in between two pulleys 3. The string support block 8, preferably an upper part 8a of the string support block 8, can include a string support channel 9 preferably having a cross-sectional shape matching a cross-sectional shape of the endless string 2. The matching shape of the string support channel 8 can improve the stability of the endless string 2. The upper part 8a of the string support block 8 preferably does not touch the channel bottom 6. The slit 7 in the channel bottom 6 may preferably be larger where there is a string support block 8. Advantageously, the at least one string support block 8 can be movable between a first position, in which the string support block 8 supports the string 2, as shown in Figure 3A, and a second position, in which the string support block 8 is retracted, as shown in Figure 3B. In the retracted position of the string support block 8, the string 2 may or may not rest on the string support block 8, in particular on the string support channel 9. In the retracted position of the string support block 8, the endless string 2 may not protrude anymore above the channel bottom 6, such that a vial 5 cannot not rest on the string 2 anymore, but can rest on the channel bottom 6 instead. In this way, the vials 5 can come to a halt without having to stop the string 2 rotating.

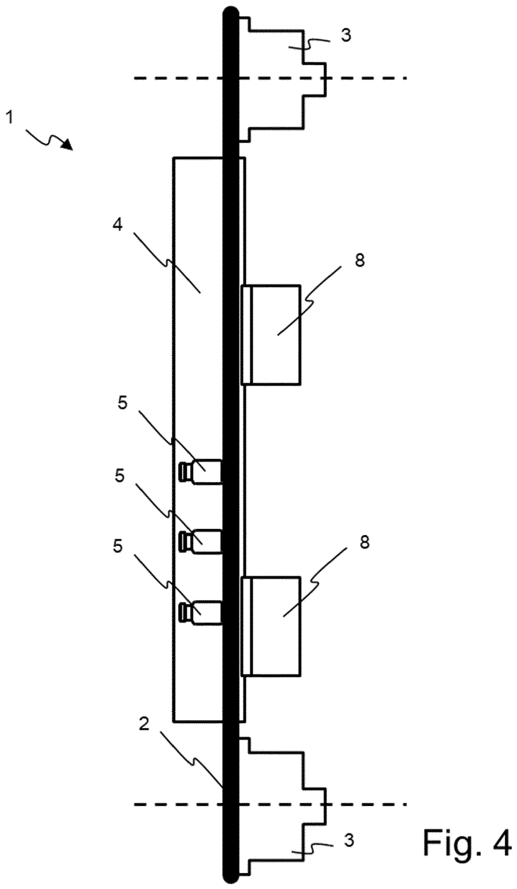

Figure 4 shows a side view of the preferred embodiment of the conveyor system 1 shown in Figure 1. Depending on a length of the endless string and/or on a distance between the two pulleys 3, the conveyor system 1 may comprise one or more string support blocks 8, which can for example be placed substantially halfway between two pulleys 3, which are at a distance of for example 3 m to 3.5 m or more or less of each other. More string support blocks 8 can increase the stability of the rotating endless string 2 but at the same time, more string support blocks 8 can increase dust production during operation of the conveyor system since there is direct contact and thus friction between the endless string 2 and the string support block 8. The string support block 8 can support the endless string 2 over a length of for example 55 mm to more or less 65 mm.

Figure 5 shows a cross-section according to the section C-C of the pulley 3 of the embodiment of the conveyor system shown in Figure 1. The pulley 3 can include a drive axle 10 which is configured to transfer a driving force from an actuation mechanism (not shown) to the pulley 3 to make the pulley rotate. The pulley includes a top surface 11. An upper edge of the pulley 3, and in particular of the top surface 11, can include a string receiving recess 12 configured to receive the endless string 2 such that the endless string 2 protrudes above the pulley 3, in particular above the top surface 11, to allow the endless string 2 to carry the vials 5. The string receiving recess 12 can be shaped such that a risk of the string 2 slipping along or off the pulley 3 can be minimized while at the same time keeping the string in a position allowing the string 2 to protrude above a top surface 11 of the pulley 3. The pulley 3 is therefore configured such that the endless string 2 can continue to carry the vial 5 even where the endless string 2 is in engagement with the pulley 3.

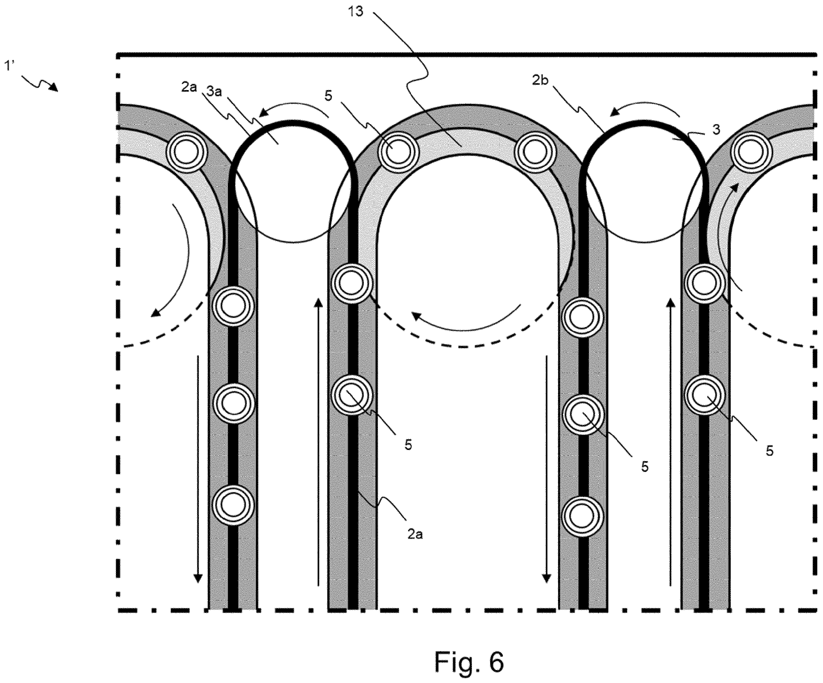

Figure 6 shows a top view of a second embodiment of a conveyor system according to a first aspect of the invention. The conveyor system 1' comprises a plurality of endless strings 2, for example two endless strings, and a corresponding plurality of pulleys 3 such that every endless string can rotate about a pair of pulleys 3. The endless strings 2 can be positioned alongside each other such that the pulleys 3 are placed substantially in a row transverse to the direction of the endless strings 2. The system can further comprise at least one transfer wheel 13 configured to be in engaging contact with a first endless string 2a and to be at a distance of a second endless string 2b. The guiding side walls are configured to transfer vials 5 from the first endless string 2a via the transfer wheel 13 to the second endless string 2b. When the pulleys 3a of the first engaging string 2a are for example driven anti-clockwise, then the engaging contact between the first endless string 2a and the transfer wheel 13 causes the transfer wheel 13 to rotate clockwise. The guiding side walls 4 can then guide the vials 5 in such a way that the vials 5 are transferred from the first endless string 2a to the transfer wheel 13 on which the vials can rotate half of a tour in a clockwise sense before being transferred by the guiding side walls 4 onto the endless string 2b which can be rotating anti-clockwise. This assembly can be repeated as many times as needed. As a result, a very compact conveyor system can be obtained, in which the vials follow a zigzagging trajectory while being carried on an endless string, except for the short transfer to a next endless string via the transfer wheel. All pulleys 3 can be rotating in the same direction while all transfer wheels 13 placed in between two pulleys on one side of the conveyor system 1' can rotate in the opposite direction.

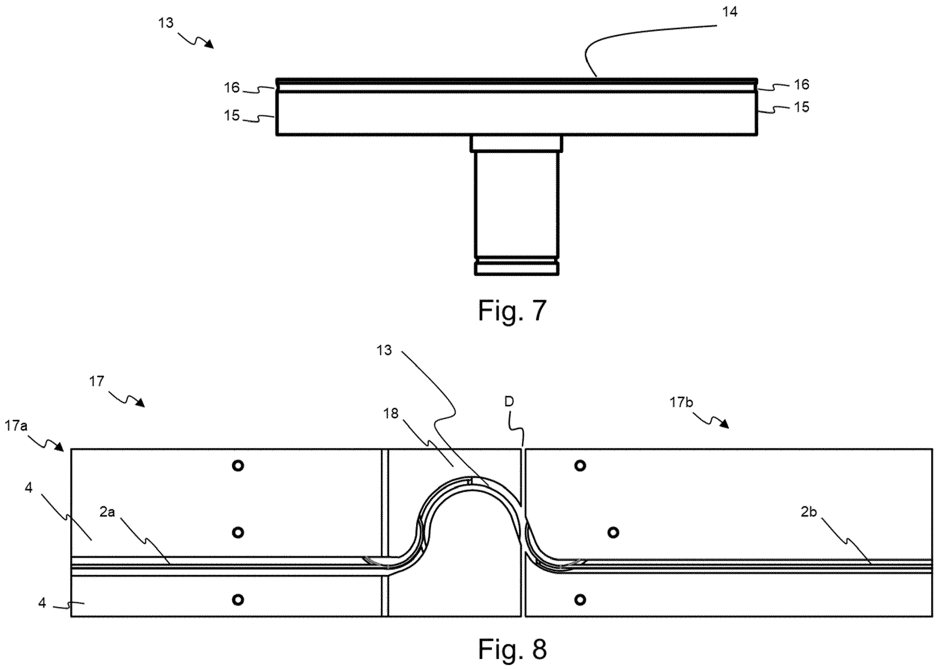

Figure 7 shows a side view of a transfer wheel of the second embodiment of the conveyor system shown in Figure 6. A top side 14 of the transfer wheel 13 preferably has a flat and/or smooth surface configured to carry vials 5. A lateral side 15 of the transfer wheel can include a recess 16 configured to engage an adjacent endless string 2. Contrary to a pulley 3 of the conveyor system, the recess 16 in the transfer wheel 13 is not located at an upper edge but really on a lateral side of the transfer wheel 13 such as to avoid that the endless string 2 protrudes above a top side 14 of the transfer wheel 13. This is to ensure that the vials can be transferred from the endless string 2a to the transfer wheel 13 in a relatively smooth way.

Figure 8 shows a top view of a preferred embodiment of the cross-over system 17 according to a second aspect of the invention. A cross-over system is configured to convey vials from a first room into a second room, and in particular into and out of a clean room. For clean rooms grade C or ISO 7 there is for example a maximum of 352000 particles of 0.5 µm per m³. Given the strict requirements on dust particles in the air of a clean room, the systems inside and outside a clean room may preferably not be in touch, which may be relatively difficult to realize for a conveyor system when products need to be conveyed into or out of a clean room. The present embodiment of a cross-over system can fulfil the requirement of separation of conveyor systems while ensuring the continuation of the conveying trajectory. The cross-over system 17 comprises a first conveyor system 17a located in the first room and a second conveyor system 17b located in the second room. Both conveyor systems 17a and 17b include at least all features of the conveyor system 1 shown in Figure 1, i.e. two pulleys 3 between which an endless string 2 is made to rotate by an actuation mechanism and guiding side walls 4 to guide the vials along a defined trajectory. In the present embodiment, the guiding side walls 4 are configured to guide the vials along only half of the endless string 2 from one pulley to the other but not back. The cross-over system further comprises a transfer wheel 13 configured to be in engaging contact with the first endless string 2a of the first conveyor system 17a and to be at a distance of the second endless string 2b of the second conveyor system 17b. Instead of being placed alongside each other, the two endless strings 2a, and 2b are placed substantially in line with each other, and the transfer wheel 13 is placed in between the pulleys of the first and second conveyor system 17a, 17b. The cross-over system further includes transfer side walls 18 which are configured to transfer vials from the first endless string 2a via the transfer wheel 13 to the second endless string 2b. In analogy with the conveyor system shown in Figure 6, the vials are first carried by the first endless string 2a of the first conveyor system 17a and then transferred onto a surface of the transfer wheel 13 before being transferred again onto the string 2b of the second conveyor system 17b. A distance D between the first conveyor system 17a and the second conveyor system 17b can be included in a range of more or less 1 mm to more or less 4 mm, which may be sufficient for clean room requirements.

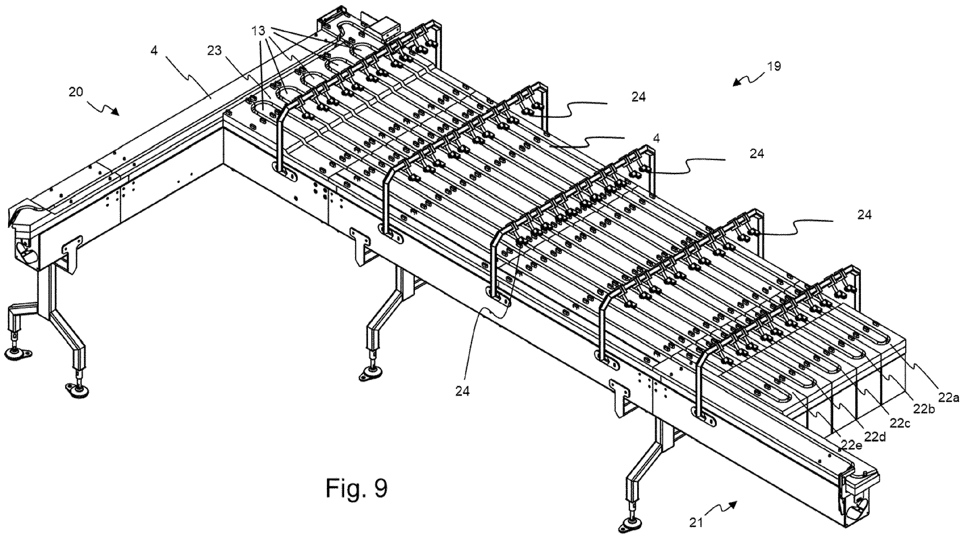

Figure 9 shows a perspective view of a preferred embodiment of a buffer system 19 according to a third aspect of the invention. The buffer system 19 can include a supply conveyor 20 including a conveyor system having at least the features as described in Figure 1. In the supply conveyor the guiding side walls 4 are placed such that only one direction of the endless string can be used while the other direction has been covered. The buffer system 19 can also include an exit conveyor 21 which may be similar to the supply conveyor 20, having guiding side walls such that only one direction of the endless string can be in use. Then most importantly, the buffer system comprises a plurality of conveyor systems 22a - 22e, five in the present embodiment, all placed alongside each other, as previously described in for example Figure 1. The buffer system 19 further comprises a plurality of transfer wheels 13 each being configured to be in engaging contact with a first endless string and to be at a distance of an adjacent endless string, as already shown and explained for Figure 6. In the present embodiment, the buffer system 19 includes five transfer wheels. The buffer system 19 further comprises transfer side walls 23 wherein the transfer side walls are configured to transfer vials from a first endless string via the transfer wheel 13 to an adjacent endless string. The guiding side walls 4 together with the transfer side walls 23 can provide a zigzagging trajectory for the vials. It is relatively easy to install in such a compact buffer system 19 a plurality of sensors 24 configured to sense a quantity of vials passing at a given point of the trajectory. These sensors 24 can for example be optical sensors hanging above each conveying direction of the plurality of endless strings. The buffer system 19 can then further comprise a control unit (not shown) configured to control the moving of the vials: in case of too many vials, the control unit can halt the conveying of the vials. This can for example be done by stopping a rotation of the pulleys and the endless string. In a more advantageous way, the conveyor systems 22a - 22e can each include at least one string support block as shown in Figures 3A, 3B and 4 and described above, of which a movement can then be individually controlled by the control unit of the buffer system based on the quantity of vials passing as sensed by the sensors 24. In this way, the vials can come to a smooth halt without having to stop the rotation of the pulleys and the endless strings.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. Conveyor system for conveying vials along a trajectory comprising
- an endless string;
- at least two pulleys configured to engage said endless string;
- an actuation mechanism configured to actuate at least one of said at least two pulleys so that the endless string rotates about the at least two pulleys;
- guiding side walls configured to guide the vials along the trajectory of the conveyor system,
wherein the endless string is configured to carry the vials along at least part of the trajectory.

2. Conveyor system according to claim 1, wherein the endless string is included in a substantially horizontal plane.

3. Conveyor system according to any of the preceding claims, wherein an upper edge of the at least two pulleys includes a string receiving recess configured to receive the endless string such that the endless string protrudes above the pulley to allow the endless string to carry the vials.

4. Conveyor system according to any of the preceding claims, further comprising a channel bottom including a slit, in which slit the endless string is configured to move while protruding above the channel bottom.

5. Conveyor system according to any of the preceding claims, further comprising at least one string support block configured to support the string in between two pulleys, wherein the at least one string support block is preferably movable between a first position, in which the string support block supports the string, and a second position, in which the string support block is retracted.

6. Conveyor system according to any of the preceding claims, further comprising a sensor configured to sense a quantity of vials passing at a given point of the trajectory.

7. Conveyor system according to claims 5 and 6, wherein the at least one string support block is movable between a first position, in which the string support block supports the string, and a second position, in which the string support block is retracted, the conveyor system further comprising a control unit configured to control the moving of the at least one string support block based on the quantity of vials passing as sensed by the sensor.

8. Conveyor system according to any of the preceding claims, further comprising a transfer wheel configured to be in engaging contact with a first endless string and to be at a distance of a second endless string, wherein the guiding side walls are configured to transfer vials from the first endless string via the transfer wheel to the second endless string.

9. Cross-over system for conveying vials from a first room into a second room, the system comprising
- a first conveyor system according to any of the preceding claims located in the first room;
- a second conveyor system according to any of the preceding claims located in the second room;
- a transfer wheel configured to be in engaging contact with the first endless string and to be at a distance of the second endless string,
- transfer side walls wherein the transfer side walls are configured to transfer vials from the first endless string via the transfer wheel to the second endless string.

10. Buffer system for buffering vials in a vial conveyor system comprising
- a first conveyor system according to any of the preceding claims 1-8;
- at least a second conveyor system according to any of the preceding claims 1-7, wherein the at least second conveyor system is located alongside the first conveyor system;
- a transfer wheel configured to be in engaging contact with the first endless string and to be at a distance of the second endless string,
- transfer side walls wherein the transfer side walls are configured to transfer vials from the first endless string via the transfer wheel to the second endless string.

11. Buffer system according to claim 10, further comprising at least one string support block configured to support the string in between two pulleys, wherein the at least one string support block is preferably movable between a first position, in which the string support block supports the string, and a second position, in which the string support block is retracted.

12. Buffer system according to any of the preceding claims 10-11, further comprising a sensor configured to sense a quantity of vials passing at a given point of the trajectory.

13. Buffer system according to claims 11 and 12, wherein the at least one string support block is movable between a first position, in which the string support block supports the string, and a second position, in which the string support block is retracted, the buffer system further comprising a control unit configured to control the moving of the at least one string support block based on the quantity of vials passing as sensed by the sensor.

14. Method of conveying vials along a trajectory comprising the steps of
- providing an endless string
- providing at least two pulleys to engage the endless string;
- actuating at least one of said at least two pulleys so that the endless string rotates about the at least two pulleys
- providing guiding side walls to guide the vials along the trajectory wherein the endless string carries the vials along at least part of the trajectory, the method preferably further comprising the steps of
- counting the vials passing at a given point of the trajectory;
- controlling at least one string support block to move between a first position, in which the string support block supports the string, and a second position, in which the string support block is retracted,
and/or preferably further comprising the step of
replacing and/or adjusting the guiding side walls in function of a maximal external diameter of the vials to be conveyed.

15. Method according to claim 14, comprising the steps of
- providing a first endless string and a second endless string
- providing a transfer wheel in engaging contact with the first endless string and at a distance of the second endless string
- providing guiding side walls to transfer vials from the first endless string via the transfer wheel to the second endless string.
